# DEMANDE DE BREVET EUROPEEN

(11) **EP 4 799 825 A1**
(43) Date de publication de la demande: **02.09.2026**
(21) Numéro de dépôt: 26160629.7
(22) Date de dépôt: 25.02.2026
(51) Int. Cl.: B44C 3/10, B44C 5/04, B60R 13/02

(54) **PIÈCE D'ÉQUIPEMENT ET PROCÉDÉ DE RÉALISATION ASSOCIÉ**

(30) Priorité: 26.02.2025 FR 2501958
(71) Demandeur: Faurecia Intérieur Industrie, 92000 Nanterre (FR)
(72) Inventeur: BEAU, Godefroy, 92250 LA GARENNE COLOMBES (FR); MACHADO, Raquel, 95290 L'ISLE ADAM (FR); COUPEROT, Hélène, 95300 PONTOISE (FR); VACHER, Kévin, 60115 MERU CEDEX (FR)
(74) Mandataire: Lavoix

(57) **Abrégé**

L'invention concerne une pièce d'équipement (110), comportant : un substrat (120), comprenant une surface externe (122) ; et une couche de revêtement (24), déposée sur la surface externe du substrat ;
la surface externe du substrat comprenant une texture formée d'une pluralité de reliefs (126) et d'une pluralité de dépressions (130), disposés de part et d'autre d'un plan médian (134) ;
chaque relief comprenant au moins un sommet (140) ; chaque dépression comprenant au moins un creux (144).

La couche de revêtement comprend une première épaisseur moyenne (E_{cm}) au niveau des creux (144) des dépressions et une deuxième épaisseur moyenne (Eₛₘ) au niveau des sommets (140) des reliefs, la première épaisseur moyenne étant non-nulle et strictement supérieure à la deuxième épaisseur moyenne.

## Description

La présente invention concerne une pièce d'équipement, du type comportant : un substrat, comprenant une surface externe ; et une couche de revêtement, déposée sur la surface externe du substrat ; la surface externe du substrat comprenant une texture formée d'une pluralité de reliefs et d'une pluralité de dépressions, adjacents les uns aux autres et sensiblement disposés de part et d'autre d'un plan médian de ladite surface externe ; chaque relief comprenant au moins un sommet, disposé à une distance maximale dudit plan médian ; chaque dépression comprenant au moins un creux, disposé à une distance maximale dudit plan médian ; la couche de revêtement comprenant une matrice et des pigments.

L'invention s'applique particulièrement aux pièces d'équipement destinées à former des parois d'un habitacle de véhicule automobile.

Il est connu de réaliser des pièces d'équipement comprenant des surfaces texturées, destinées à imiter l'apparence d'un matériau d'ornement. De telles pièces d'équipement confère un aspect qualitatif à l'habitacle du véhicule, pour un coût maîtrisé.

Cependant, il est fréquent que de telles pièces d'équipement, réalisées par exemple par moulage d'un matériau thermoplastique, ne reproduisent pas de manière réaliste l'aspect des matériaux qu'elles sont destinées à imiter.

La présente invention a pour but de proposer une pièce d'équipement d'aspect visuel amélioré, notamment apte à reproduire fidèlement l'aspect d'un matériau d'ornement.

A cet effet, l'invention a pour objet une pièce d'équipement du type précité, dans laquelle la couche de revêtement comprend une première épaisseur moyenne au niveau des creux des dépressions et une deuxième épaisseur moyenne au niveau des sommets des reliefs, la première épaisseur moyenne étant non-nulle et strictement supérieure à la deuxième épaisseur moyenne.

Suivant d'autres aspects avantageux de l'invention, la pièce d'équipement comporte l'une ou plusieurs des caractéristiques suivantes, prises isolément ou suivant toutes les combinaisons techniquement possibles :
- au niveau d'au moins 70% des sommets des reliefs de la surface externe du substrat, une épaisseur de la couche de revêtement est supérieure ou égale à 20% de la première épaisseur moyenne et préférentiellement supérieure ou égale à 50% de ladite première épaisseur moyenne ;
- au niveau d'au moins 70% des sommets des reliefs de la surface externe du substrat, une épaisseur de la couche de revêtement est inférieure ou égale à 1% de la première épaisseur moyenne ;
- au niveau d'au moins 70% des sommets des reliefs de la surface externe du substrat, une épaisseur de la couche de revêtement est nulle ;
- au niveau des sommets des reliefs, la surface externe du substrat présente une première rugosité moyenne ; et au niveau des creux des dépressions, ladite surface externe présente une deuxième rugosité moyenne, strictement supérieure à la première rugosité moyenne ;
- au niveau des creux des dépressions, la surface externe présente une microtexture rugueuse.

L'invention se rapporte en outre à un procédé de fabrication d'une pièce d'équipement telle que décrite ci-dessus, comprenant les étapes suivantes : fourniture d'un moule à injection, ledit moule à injection comprenant une surface de moulage, complémentaire de la surface externe du substrat ; puis réalisation du substrat par injection d'un matériau plastique dans le moule ; puis dépôt d'une composition fluide, précurseur de la couche de revêtement, sur la surface externe du substrat ; puis durcissement de la composition fluide pour conduire à la couche de revêtement.

Suivant d'autres aspects avantageux de l'invention, le procédé comporte l'une ou plusieurs des caractéristiques suivantes, prises isolément ou suivant toutes les combinaisons techniquement possibles :
- la composition fluide est déposée sur la surface externe du substrat sous forme d'une nappe d'épaisseur sensiblement uniforme ; et le procédé comprend ensuite une étape de retrait, partiel ou total, de ladite composition fluide ou de la couche de revêtement au niveau des sommets des reliefs de la surface externe du substrat ;
- l'étape de retrait est mise en œuvre après l'étape de durcissement de la composition fluide, ladite étape de retrait comprenant une ablation partielle ou totale de la couche de revêtement au niveau des sommets des reliefs de la surface externe du substrat ;
- l'étape de retrait est mise en œuvre avant l'étape de durcissement de la composition fluide, ladite étape de retrait comprenant un écoulement de la composition fluide depuis les sommets des reliefs vers les dépressions de la surface externe du substrat ;
- la composition fluide est une composition thixotrope ; et l'étape de retrait comporte l'application d'une vibration au substrat, de sorte à modifier une viscosité de ladite composition fluide ;
- au cours de l'étape de dépôt de la composition fluide sur la surface externe du substrat, ladite composition fluide n'est pas déposée sur les sommets des reliefs de ladite surface externe ;
- le procédé comprend les étapes suivantes : création d'une image en deux dimensions, correspondant à une projection de la surface externe du substrat sur le plan médian ; ladite image étant sous forme d'un ensemble de points répartis entre un premier et un deuxième groupes, lesdits premier et deuxième groupes comprenant respectivement les points correspondant aux sommets de la pluralité de reliefs et aux creux de la pluralité de dépressions de ladite surface externe ; puis projection de composition fluide sur ladite surface externe, au niveau des points correspondant au deuxième groupe sur la deuxième image.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue en coupe d'une pièce d'équipement selon un premier mode de réalisation de l'invention ;
[Fig. 2] la figure 2 est une vue de détail, en coupe, de la pièce d'équipement de la figure 1 ;
[Fig. 3] la figure 3 est une vue de détail, en coupe, d'une pièce d'équipement selon un deuxième mode de réalisation de l'invention ;
[Fig. 4] la figure 4 est un graphique illustrant un procédé de réalisation d'une pièce d'équipement selon une première variante de l'invention ; et
[Fig. 5] la figure 5 est un logigramme représentant un procédé de réalisation d'une pièce d'équipement selon une deuxième variante de l'invention.

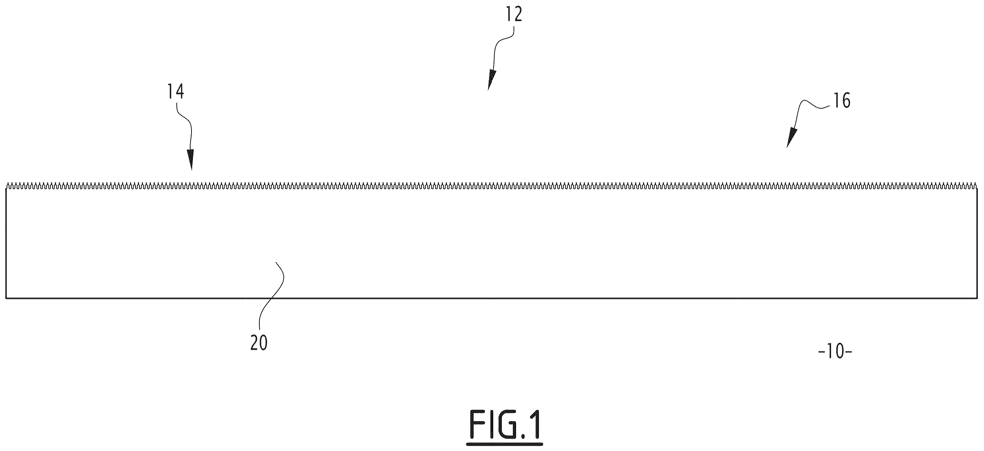

La figure 1 montre une pièce d'équipement 10 selon un mode de réalisation de l'invention.

La pièce d'équipement 10 est notamment destinée à équiper un habitacle d'un véhicule automobile.

La pièce d'équipement 10 comprend notamment une surface d'aspect 12, destinée à être orientée vers l'intérieur de l'habitacle, de sorte à être visible par les occupants du véhicule.

En particulier, la surface d'aspect 12 est texturée, de sorte à imiter l'apparence d'un matériau d'ornement. Un tel matériau est par exemple de type textile, bois ou pierre.

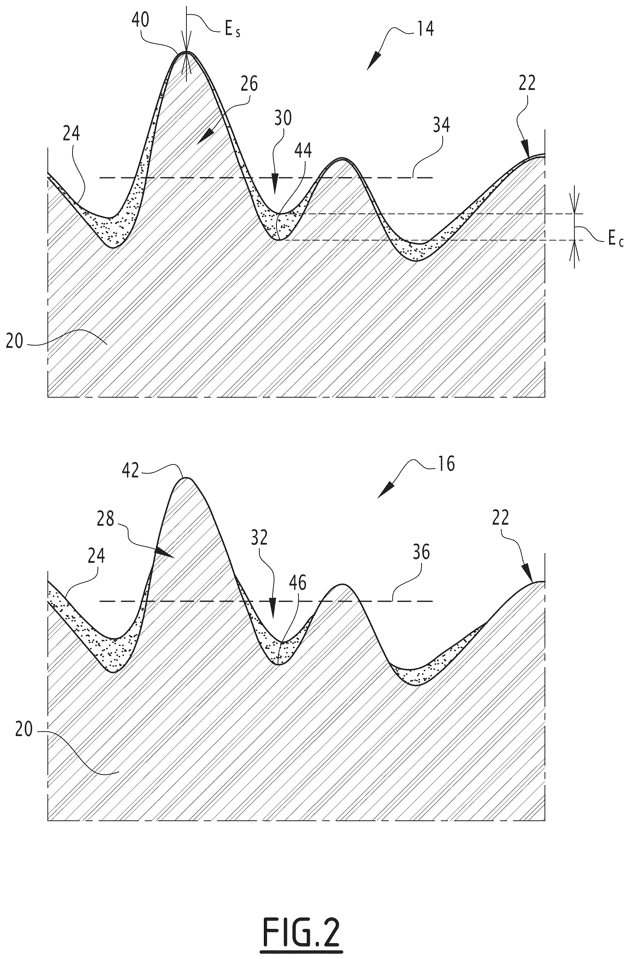

La figure 2 montre une vue détaillée, en coupe, d'une première 14 et d'une deuxième 16 zones de la surface d'aspect 12 de la figure 1.

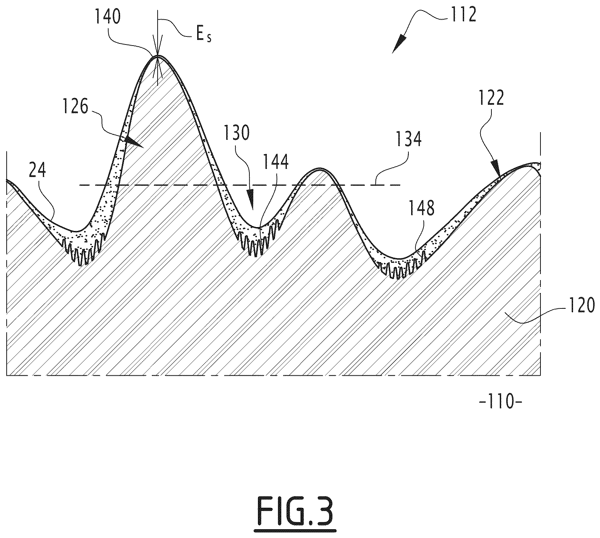

La figure 3 montre une vue détaillée, en coupe, d'une pièce d'équipement 110 selon une variante de réalisation de la pièce d'équipement 10. La pièce d'équipement 110 comprend une surface d'aspect 112, similaire à la surface d'aspect 12 de la pièce d'équipement 10.

Les pièces d'équipement 10 et 110 seront décrites simultanément ci-après.

La pièce d'équipement 10, 110 comprend : un substrat 20, 120, comprenant une surface externe 22, 122 ; et une couche de revêtement 24, déposée sur la surface externe 22, 122 du substrat 20, 120, de sorte à former la surface d'aspect 12, 112 de ladite pièce d'équipement 10, 110.

Préférentiellement, le substrat 20, 120, comprend un matériau plastique, formant en particulier la surface externe 22, 122. Plus préférentiellement, le matériau plastique est de type polyoléfine, encore plus préférentiellement de type polypropylène.

Plus préférentiellement, le substrat 20, 120 est formé de manière monobloc dans ledit matériau plastique.

Comme visible sur les figures 2 et 3, la surface externe 22, 122 du substrat 20, 120 comprend une texture formée d'une pluralité de reliefs 26, 28, 126 et d'une pluralité de dépressions 30, 32, 130 adjacents les uns aux autres. Les reliefs 26, 28, 126 et les dépressions 30, 32, 130 sont sensiblement disposés de part et d'autre d'un plan médian 34, 36, 134 de la surface externe 22, 122.

Sur la figure 1, la surface externe 22 présente une forme générale sensiblement plane ; et le plan médian 34 de la première zone 14 est sensiblement confondu au plan médian 36 de la deuxième zone 16. En variante non représentée, la surface externe présente une forme générale non plane ; et le plan médian s'entend localement, sur une zone restreinte de ladite surface externe.

Dans la suite de la description, on considère que la surface externe 22, 122 du substrat 20, 120 est sensiblement horizontale et orientée vers le haut ; et que les plans médians 34, 36, 134 sont horizontaux.

Chaque relief 26, 28, 126 de la surface externe 22, 122 comprend au moins un sommet 40, 42, 140, disposé à une distance maximale du plan médian 34, 36, 134 ; et chaque dépression 30, 32, 130 comprend au moins un creux 44, 46, 144, disposé à une distance maximale dudit plan médian.

Selon un exemple de réalisation, la texture de la surface externe 22, 122 du substrat 20, 120 est configurée comme suit : chacun des reliefs 26, 28, 126 est défini à partir d'une base sensiblement circulaire ; un diamètre de ladite base, mesuré au niveau des creux 44, 46, 144 des dépressions adjacentes, est préférentiellement compris entre 10 µm et 50 µm ; et une hauteur de chacun des reliefs 26, 28, 126, mesurée entre le sommet 40, 42, 140 et les creux 44, 46, 144 des dépressions adjacentes, est préférentiellement compris entre 50 µm et 70 µm. Une telle configuration est par exemple appropriée à l'imitation d'un motif de type textile.

La couche de revêtement 24 comprend : une matrice, préférentiellement de type polymère ; et des pigments intégrés à ladite matrice, par exemple sous forme de solution ou de dispersion. Selon un mode de réalisation, la couche de revêtement 24 est translucide. Selon un autre mode de réalisation, la couche de revêtement 24 est partiellement ou totalement opaque.

Préférentiellement, la couche de revêtement 24 et la surface externe 22, 122 du substrat 20, 120 sont de couleurs différentes. Plus préférentiellement, lesdites couleurs présentent un contraste visuel lorsqu'elles sont juxtaposées.

La couche de revêtement 24 présente une épaisseur non uniforme sur l'ensemble de la surface externe 22, 122 du substrat 20, 120.

Plus précisément, la couche de revêtement 24 comprend : une première épaisseur moyenne E_{cm} au niveau des creux 44, 46, 144 des dépressions 30, 32, 130 ; et une deuxième épaisseur moyenne Eₛₘ au niveau des sommets 40, 42, 140 des reliefs 26, 28, 126.

La première épaisseur moyenne E_{cm} est une moyenne des épaisseurs E_{c} de la couche de revêtement 24 au niveau des creux 44, 46, 144 des dépressions 30, 32, 130. La deuxième épaisseur moyenne Eₛₘ est une moyenne des épaisseurs Eₛ de la couche de revêtement 24 au niveau des sommets 40, 42, 140 des reliefs 26, 28, 126. De préférence, on considère les moyennes arithmétiques.

La première épaisseur moyenne E_{cm} est non-nulle et strictement supérieure à la deuxième épaisseur moyenne Eₛₘ. En d'autres termes, la couche de revêtement 24 est plus épaisse au niveau des creux 44, 46, 144 des dépressions 30, 32, 130 qu'au niveau des sommets 40, 42, 140 des reliefs 26, 28, 126. Plus généralement, la couche de revêtement 24 est préférentiellement plus épaisse au niveau des dépressions 30, 32, 130 qu'au niveau des reliefs 26, 28, 126.

Selon un premier mode de réalisation, la couche de revêtement 24 est sensiblement continue sur l'ensemble de la surface externe 22, 122 du substrat 20, 120. Plus précisément, selon ledit premier mode de réalisation, l'ensemble de la surface d'aspect 12 de la pièce d'équipement 10 présente l'apparence de la première zone 14 visible sur la figure 2.

Par exemple, au niveau d'au moins 70% des sommets 40, 140 des reliefs 26, 126 de la surface externe du substrat, une épaisseur Eₛ de la couche de revêtement 24 est préférentiellement supérieure ou égale à 20% de la première épaisseur moyenne E_{cm} et plus préférentiellement supérieure ou égale à 50% de ladite première épaisseur moyenne E_{cm}. Les sommets 40, 140 des reliefs 26, 126 de la surface externe 22, 122 sont donc revêtus, au même titre que les creux 44, 144 des dépressions 30, 130.

De préférence, le substrat 20, 120 et la couche de revêtement 24 sont configurés de sorte qu'une épaisseur locale de ladite couche de revêtement 24 se traduise par un aspect visuel particulier de la surface d'aspect 12, 112 à l'endroit correspondant. Par exemple, la surface externe 22, 122 du substrat 20, 120 présente une couleur claire ; les pigments de la couche de revêtement 24 présentent une couleur foncée ; et ladite couche de revêtement 24 est partiellement translucide. Ainsi, les sommets 40, 140 des reliefs 26, 126 de la surface externe 22, 122, recouverts d'une épaisseur plus fine de revêtement que les creux 44, 144 des dépressions 30, 130, apparaissent d'une couleur plus claire que lesdits creux.

La texture non homogène de la surface externe 22, 122 du substrat 20, 120 est ainsi soulignée par les couleurs de la couche de revêtement 24, améliorant qualitativement l'apparence de la surface d'aspect 12, 112 de la pièce d'équipement 10, 110.

Selon un deuxième mode de réalisation, la couche de revêtement 24 est discontinue sur l'ensemble de la surface externe 22, 122 du substrat 20, 120. Plus précisément, selon ledit deuxième mode de réalisation, l'ensemble ou une grande partie partie de la surface d'aspect 12 de la pièce d'équipement 10 présente l'apparence de la deuxième zone 16 visible sur la figure 2.

Par exemple, au niveau d'au moins 70% des sommets 42 des reliefs 28 de la surface externe 22 du substrat, une épaisseur de la couche de revêtement est inférieure ou égale à 1% de la première épaisseur moyenne E_{cm}. Selon un cas particulier du deuxième mode de réalisation, au niveau d'au moins 70% des sommets 42 des reliefs 28 de la surface externe 22, une épaisseur de la couche de revêtement 24 est nulle.

Les sommets 42 des reliefs 28 de la surface externe 22 du substrat sont donc découverts, contrairement aux creux 46 des dépressions 32. Le contraste visuel entre les couleurs de la couche de revêtement 24 et de la surface externe 22, 122 du substrat souligne ainsi la texture de ladite surface externe.

Selon un troisième mode de réalisation, comme sur la figure 1, la surface d'aspect 12 comprend à la fois une ou des zones 14 dans lesquelles les sommets 40, 140 des reliefs 26, 126 sont revêtus et une ou des zones 16 dans lesquelles les sommets 42 des reliefs 28 sont découverts.

Un mode particulier de réalisation du substrat 120, tel que représenté sur la figure 3, va à présent être décrit.

Selon ledit mode particulier de réalisation, au niveau des sommets 140 des reliefs 126, la surface externe 122 présente une première rugosité moyenne ; et au niveau des creux 144 des dépressions 130, la surface externe 122 présente une deuxième rugosité moyenne, strictement supérieure à la première rugosité moyenne.

Ainsi, la tension de surface de la surface externe 122 est plus faible au niveau des sommets 140 des reliefs qu'au niveau des creux 144 des dépressions.

De préférence, au niveau des creux 144 des dépressions, la surface externe 122 présente une microtexture rugueuse. Dans le mode de réalisation de la figure 3, la microtexture rugueuse est par exemple formée de stries ou de pointes 148.

A titre d'exemple, avec une texture de la surface externe 22, 122 configurée comme décrit précédemment, les stries ou pointes 148 de la microtexture rugueuse présentent une largeur de l'ordre de 0,1 µm et une hauteur de l'ordre de 0,5 µm.

Un procédé de réalisation de la pièce d'équipement 10, 110 va à présent être décrit.

Un tel procédé comprend les étapes suivantes : fourniture d'un moule à injection (non représenté), ledit moule à injection comprenant une surface de moulage (non représentée), complémentaire de la surface externe 22, 122 du substrat 20, 120 ; puis réalisation du substrat 20, 120 par injection d'un matériau plastique dans le moule ; puis dépôt d'une composition fluide, précurseur de la couche de revêtement 24, sur la surface externe 22, 122 du substrat ; puis durcissement de la composition fluide pour conduire à la couche de revêtement 24.

De préférence, les étapes de dépôt et de durcissement de la composition fluide sont mises en œuvre alors que la surface externe 22, 122 du substrat 20, 120 est disposée sensiblement horizontalement et orientée vers le haut.

Selon un premier mode de réalisation du procédé, la composition fluide est déposée sur la surface externe 22, 122 du substrat sous forme d'une nappe d'épaisseur sensiblement uniforme ; et le procédé comprend ensuite une étape de retrait, partiel ou total, de ladite composition fluide ou de la couche de revêtement 24 au niveau des sommets 40, 42, 140 des reliefs 26, 28, 126 de la surface externe 22, 122 du substrat.

Selon une première variante, l'étape de retrait est mise en œuvre après l'étape de durcissement de la composition fluide ; et ladite étape de retrait comprend une ablation partielle ou totale de la couche de revêtement 24 au niveau des sommets 40, 42, 140 des reliefs 26, 28, 126 de la surface externe du substrat.

L'ablation est par exemple effectuée de manière mécanique, notamment par un brossage de la couche de revêtement 24. Alternativement, l'ablation est effectuée par un moyen thermique tel qu'un faisceau laser.

Si l'ablation est partielle, des sommets 40, 140 revêtus sont obtenus, la surface externe 22, 122 du substrat étant continument recouverte de la couche de revêtement 24. Si l'ablation est totale, des sommets 42 découverts sont obtenus.

Selon une deuxième variante, l'étape de retrait est mise en œuvre avant l'étape de durcissement de la composition fluide ; et ladite étape de retrait comprend un écoulement de la composition fluide depuis les sommets 40, 42, 140 des reliefs 26, 28, 126 vers les dépressions 30, 32, 130 de la surface externe du substrat. Préférentiellement, ledit écoulement est mis en œuvre alors que la surface externe 22, 122 du substrat 20, 120 est disposée sensiblement horizontalement et orientée vers le haut.

Selon la viscosité de la composition fluide, l'écoulement depuis les sommets 40, 42, 140 est partiel ou total, conduisant à des sommets revêtus ou découverts.

Dans le mode de réalisation de la figure 3, la tension de surface plus faible au niveau des sommets 140 favorise un tel écoulement ; et la tension de surface au niveau des creux 144, augmentée par la microtexture rugueuse, favorise l'accumulation de la composition fluide dans les creux 44, 46, 144 des dépressions 30, 32, 130.

Selon une mise en œuvre particulière de la deuxième variante, la composition fluide est une composition thixotrope ; et l'étape de retrait comporte l'application d'une vibration au substrat, de sorte à modifier une viscosité de ladite composition fluide.

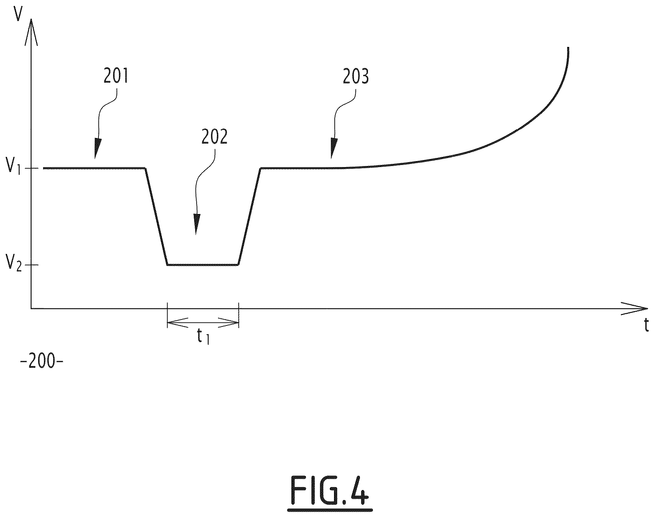

En particulier, la figure 4 représente une variation, en fonction du temps t, de la viscosité V d'une composition fluide thixotrope, au cours d'une étape 200 de dépôt puis de durcissement de ladite composition.

Une première période 201 correspond au dépôt de la composition fluide, précurseur de la couche de revêtement 24, sur la surface externe 22, 122 du substrat. Durant la première période 201, la viscosité de ladite composition fluide correspond à une première valeur V1.

Une deuxième période 202 correspond à l'application d'une vibration mécanique au substrat 20, 120. De préférence, il s'agit d'une vibration périodique.

La vibration mécanique peut être appliquée dans une ou plusieurs dimensions. En d'autres termes, la vibration est appliquée horizontalement, soit parallèlement aux plans médians 34, 36, 134 de la surface externe 22, 122 ; et/ou verticalement, soit perpendiculairement auxdits plans médians.

Sous l'effet de ladite vibration, la viscosité de la composition fluide thixotrope diminue jusqu'à une deuxième valeur V2. La vibration est maintenue pendant une durée t₁, durant laquelle l'écoulement de la composition fluide depuis les sommets 40, 42, 140 des reliefs est favorisé par la viscosité diminuée.

Une troisième période 203 correspond à l'arrêt de la vibration, suivi du durcissement de la composition fluide. La viscosité reprend sa valeur initiale V1, puis augmente progressivement jusqu'à ce que la composition forme une couche solide.

Il est possible de combiner l'utilisation d'une composition fluide thixotrope avec un substrat 120 dont les creux 144 de la surface externe 122 comprennent une microtexture rugueuse, comme dans l'exemple de la figure 3.

De même, il est possible de combiner les caractéristiques ci-dessus avec une étape ultérieure d'ablation totale ou partielle de la couche de revêtement 24 sur des sommets 40, 42, 142, après durcissement de la composition fluide.

Selon un deuxième mode de réalisation du procédé, la composition fluide est déposée sur la surface externe 22, 122 du substrat 20, 120 de manière localisée, et non sous forme d'une nappe homogène.

Plus précisément, dans le deuxième mode de réalisation du procédé, la composition fluide est déposée sur la surface externe 22, 122 de manière à contourner les sommets 40, 42, 140 des reliefs 26, 28, 126. Par exemple, la composition fluide est déposée uniquement dans les dépressions 30, 32, 130.

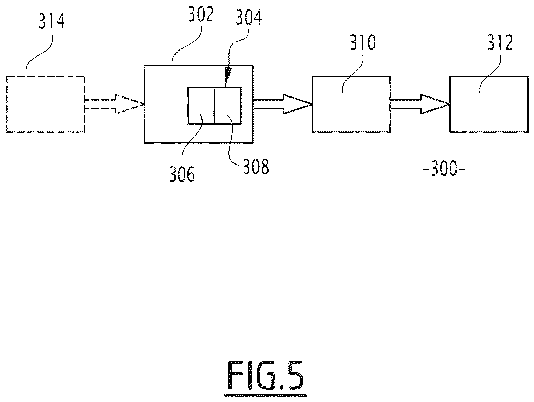

La figure 5 montre un logigramme illustrant un exemple 300 du deuxième mode de réalisation du procédé.

Le procédé 300 comporte une étape 302 de création d'une image 304 en deux dimensions, correspondant sensiblement à une projection de la surface externe 22, 122 du substrat sur le plan médian 34, 36, 134. L'image 304 est formée d'un ensemble de points répartis entre un premier 306 et un deuxième 308 groupes.

Les premier 306 et deuxième 308 groupes comprennent respectivement les points correspondant aux sommets 40, 42, 140 de la pluralité de reliefs 26, 28, 126 et aux creux 44, 46, 144 de la pluralité de dépressions 30, 32, 130 de la surface externe 22, 122. De préférence, le premier groupe 306 correspond sensiblement à la pluralité de reliefs 26, 28, 126 et le deuxième groupe 308 correspond sensiblement à la pluralité de dépressions 30, 32, 130.

Dans une deuxième étape 310 du procédé 300, un dispositif de type imprimante à jet d'encre (non représenté) projette la composition fluide sur la surface externe 22, 122 du substrat 20, 120, uniquement au niveau des points du deuxième groupe 308 sur l'image 304 en deux dimensions. La composition fluide est donc projetée uniquement au niveau des dépressions 30, 32, 130 de la surface externe 22, 122.

Dans une troisième étape 312, la composition fluide ainsi projetée durcit, conduisant à une couche de revêtement 24 discontinue sur la surface externe 22, 122 du substrat 20, 120. La surface d'aspect 12, 112 obtenue de la pièce d'équipement 10, 110 présente l'apparence de la deuxième zone 16 visible sur la figure 2.

Selon une variante de réalisation, les points du deuxième groupe 308 sont répartis en au moins deux sous-groupes (non représentés) ; et lors de la deuxième étape 310, des compositions fluides de couleurs différentes sont projetées sur les points correspondant auxdits différents sous-groupes. Un résultat plus nuancé de surface d'aspect 12, 112 est ainsi obtenu.

Selon une autre variante de réalisation, l'image 304 en deux dimensions est configurée de sorte que de la composition fluide soit projetée également sur certains des reliefs 26, 28, 126 de la surface externe 22, 122, de manière à conférer un aspect irrégulier à la surface d'aspect 12, 112.

De préférence, l'image 304 en deux dimensions est réalisée à partir d'une pièce d'équipement 10, 110 obtenue selon le premier mode de réalisation du procédé décrit ci-dessus, soit selon le procédé comprenant une étape de dépôt suivie d'une étape de retrait partiel du revêtement sur la surface externe 22, 122. Par exemple, une photographie numérique de la surface d'aspect 12, 112 obtenue est réalisée, dans un plan parallèle au plan médian 34, 36, 134.

Alternativement, la réalisation de l'image 304 en deux dimensions comprend d'abord la réalisation d'une image 314 en trois dimensions, par exemple en scannant la surface externe 22, 122 du substrat 20, 120 ou la surface de moulage correspondante du moule à injection. L'image 314 en trois dimensions est ensuite convertie en l'image 304 en deux dimensions par projection sur le plan médian 34, 36, 134. Les premier 306 et deuxième 308 groupes de points sont constitués en fonction de la position du point correspondant, par rapport au plan médian 34, 36, 134, de ladite image 314 en trois dimensions.

Dans la pièce d'équipement 10, 110 obtenue à l'issue du procédé de fabrication, la texture non homogène de la surface externe 22, 122 du substrat 20, 120 est soulignée par les couleurs nuancées de la couche de revêtement 24 et éventuellement de ladite surface externe.

La surface d'aspect 12, 112 obtenue imite ainsi de manière réaliste l'apparence du matériau souhaité, tel qu'un textile, un bois ou un matériau minéral.

## Revendications

1. Pièce d'équipement (10, 110), notamment d'intérieur automobile, comprenant : un substrat (20, 120), comprenant une surface externe (22, 122) ; et une couche de revêtement (24), déposée sur la surface externe du substrat ;
la surface externe (22, 122) du substrat comprenant une texture formée d'une pluralité de reliefs (26, 28, 126) et d'une pluralité de dépressions (30, 32, 130), adjacents les uns aux autres et sensiblement disposés de part et d'autre d'un plan médian (34, 36, 134) de ladite surface externe ;
chaque relief comprenant au moins un sommet (40, 42, 140), disposé à une distance maximale dudit plan médian ; chaque dépression comprenant au moins un creux (44, 46, 144), disposé à une distance maximale dudit plan médian ;
la couche de revêtement (24) comprenant une matrice et des pigments ;
la pièce d'équipement étant **caractérisée en ce que** la couche de revêtement comprend une première épaisseur moyenne (E_{cm}) au niveau des creux (44, 46, 144) des dépressions et une deuxième épaisseur moyenne (Eₛₘ) au niveau des sommets (40, 42, 140) des reliefs, la première épaisseur moyenne étant non-nulle et strictement supérieure à la deuxième épaisseur moyenne.

2. Pièce d'équipement selon la revendication 1, dans laquelle, au niveau d'au moins 70% des sommets (40, 140) des reliefs (26, 126) de la surface externe (22, 122) du substrat, une épaisseur (Eₛ) de la couche de revêtement est supérieure ou égale à 20% de la première épaisseur moyenne (E_{cm}) et préférentiellement supérieure ou égale à 50% de ladite première épaisseur moyenne.

3. Pièce d'équipement selon la revendication 1, dans laquelle, au niveau d'au moins 70% des sommets (42) des reliefs (28) de la surface externe du substrat, une épaisseur de la couche de revêtement est nulle.

4. Pièce d'équipement selon l'une des revendications précédentes, dans laquelle, au niveau des sommets (140) des reliefs (126), la surface externe (122) du substrat présente une première rugosité moyenne ; et au niveau des creux (144) des dépressions (130), ladite surface externe présente une deuxième rugosité moyenne, strictement supérieure à la première rugosité moyenne.

5. Pièce d'équipement selon la revendication 4, dans laquelle, au niveau des creux (144) des dépressions, la surface externe (122) présente une microtexture rugueuse.

6. Procédé de fabrication d'une pièce d'équipement selon l'une des revendications 1 à 5, comprenant les étapes suivantes :
- fourniture d'un moule à injection, ledit moule à injection comprenant une surface de moulage, complémentaire de la surface externe (22, 122) du substrat (20, 120) ; puis
- réalisation du substrat (20, 120) par injection d'un matériau plastique dans le moule ; puis
- dépôt d'une composition fluide, précurseur de la couche de revêtement, sur la surface externe (22, 122) du substrat ; puis
- durcissement de la composition fluide pour conduire à la couche de revêtement (24).

7. Procédé selon la revendication 6, dans lequel : la composition fluide est déposée sur la surface externe (22, 122) du substrat sous forme d'une nappe d'épaisseur sensiblement uniforme ; et le procédé comprend ensuite une étape de retrait, partiel ou total, de ladite composition fluide ou de la couche de revêtement (24) au niveau des sommets (40, 42, 140) des reliefs de la surface externe du substrat.

8. Procédé selon la revendication 7, dans lequel l'étape de retrait est mise en œuvre après l'étape de durcissement de la composition fluide, ladite étape de retrait comprenant une ablation partielle ou totale de la couche de revêtement (24) au niveau des sommets (40, 42, 140) des reliefs de la surface externe du substrat.

9. Procédé selon la revendication 7, dans lequel l'étape de retrait est mise en œuvre avant l'étape de durcissement de la composition fluide, ladite étape de retrait comprenant un écoulement de la composition fluide depuis les sommets (40, 42, 140) des reliefs vers les dépressions (30, 32, 130) de la surface externe du substrat.

10. Procédé selon la revendication 9, dans lequel : la composition fluide est une composition thixotrope ; et l'étape de retrait comporte l'application d'une vibration au substrat (20, 120), de sorte à modifier une viscosité (V1, V2) de ladite composition fluide.

11. Procédé selon la revendication 6, dans lequel, au cours de l'étape de dépôt de la composition fluide sur la surface externe (22, 122) du substrat, ladite composition fluide n'est pas déposée sur les sommets (42) des reliefs (28) de ladite surface externe.

12. Procédé (300) selon la revendication **11,** comprenant les étapes suivantes :
- création (302) d'une image (304) en deux dimensions, correspondant à une projection de la surface externe (22, 122) du substrat sur le plan médian (34, 36, 134) ; ladite image étant sous forme d'un ensemble de points répartis entre un premier (306) et un deuxième (308) groupes, lesdits premier et deuxième groupes comprenant respectivement les points correspondant aux sommets (40, 42, 140) de la pluralité de reliefs (26, 28, 126) et aux creux (44, 46, 144) de la pluralité de dépressions (30, 32, 130) de ladite surface externe ; puis
- projection (310) de composition fluide sur ladite surface externe, au niveau des points correspondant au deuxième groupe sur la deuxième image.
